# EUROPEAN PATENT SPECIFICATION

(11) **EP 2 179 662 B1**
(45) Date of publication and mention of the grant of the patent: **12.10.2011**
(21) Application number: 08765740.9
(22) Date of filing: 12.06.2008
(51) Int. Cl.: A23L 1/314, A23L 1/325

(54) **METHOD FOR PRODUCTION OF PROCESSED LIVESTOCK MEAT FOOD OR PROCESSED SEA FOOD, AND ENZYME PREPARATION FOR IMPROVEMENT OF PROCESSED LIVESTOCK MEAT FOOD OR PROCESSED SEA FOOD**
VERFAHREN ZUR HERSTELLUNG VON VERARBEITETER NUTZTIERFLEISCHNAHRUNG ODER VERARBEITETER MEERESTIERNAHRUNG SOWIE ENZYMZUBEREITUNG FÜR DIE VERBESSERUNG VON VERARBEITETER NUTZTIERFLEISCHNAHRUNG ODER VERARBEITETER MEERESTIERNAHRUNG
PROCÉDÉ DE PRODUCTION D'ALIMENTS TRAITÉS À BASE DE VIANDE DE BÉTAIL OU D'ALIMENTS TRAITÉS À BASE DE POISSONS ET FRUITS DE MER, ET PRÉPARATION D'ENZYME PERMETTANT L'AMÉLIORATION DES ALIMENTS TRAITÉS À BASE DE VIANDE DE BÉTAIL OU DES ALIMENTS TRAITÉS À BASE

(30) Priority: 21.06.2007 JP 2007163370
(43) Date of publication of application: 28.04.2010
(73) Proprietor: Ajinomoto Co., Inc., Chuo-ku, Tokyo 104-8315 (JP)
(72) Inventor: YAMADA, Noriaki, Kawasaki-shi Kanagawa 210-8681 (JP); MARUYAMA, Akiko, Kawasaki-shi Kanagawa 210-8681 (JP); OGAWA, Teppei, Kawasaki-shi Kanagawa 210-8681 (JP)
(74) Representative: Strehl Schübel-Hopf & Partner
(86) International application number: PCT/JP2008/061185
(87) International publication number: WO 2008/156126

(56) References cited:
- WO-A1-2005/096839
- JP-A- 3 219 854
- JP-A- 01 010 949
- JP-A- 02 255 062
- JP-A- 2004 024 213
- JP-A- 2004 248 661
- NAKAJIMA T.: 'Bunki Oligosaccharide ni Tsuite' DENPUN no. 37, 21 August 1992, pages 36 - 42, XP002997030

## Description

### Technical Field

The present invention relates to a method of producing a processed meat food or a processed fishery food by using a transglutaminase and an enzyme having a saccharide transfer activity for converting an α-1,4 bond in a sugar chain to an α-1,6 bond, and an enzyme preparation for modifying a processed meat food or a processed fishery food.

### Background Art

When a gelatinized starch is left at ordinary or low temperature, it is hardened due to separation of water. This phenomenon is referred to as starch retrogradation, and many researches have been made on the starch retrogradation. In general, the starch retrogradation can be prevented by maintaining at a temperature of 80°C or higher, by rapidly drying into a water content of 15% or less, or by maintaining under an alkaline condition at a pH of 13 or more. Further, addition of a sugar (such as glucose, fructose, or a liquid sugar), a soy protein, a flour gluten, a fatty acid ester, a polysaccharide (such as a yam or a konjac), etc. to a starch-containing food has been widely known as a method for preventing the retrogradation. A method containing addition of a thickener, a surfactant, etc. is described in JP-A-59-2664. However, the methods disadvantageously result in significant taste variation and unstable effect, and thereby cannot be a satisfactory solution.

Also addition of an enzyme has been conventionally known as a method for preventing the retrogradation. For example, a method for improving cooked rice, which contains addition of an enzyme (such as an amylase, a protease, or a lipase), salt, and cyclodextrin to polished white rice before cooking, is described in JP-A-58-86050. Further a method for preventing rice retrogradation, which contains spray addition of an aqueous solution of a saccharification amylase (such as a β-amylase or a glucoamylase) to cooked rice, is described in JP-A-60-199355. However, the methods, which contain addition of various kinds of enzyme preparations to rice to improve rice quality, cannot exhibit a remarkable effect at present.

Use of a transglutaminase has been known as a method for improving the texture of a processed meat food or a processed fishery food (JP-A-01-010949, JP-A-02-255062, and JP-A-2004-298661). In addition, use of an α-glucosidase has been known as a method for improving the quality of a starch-containing food (WO 2005/096839). The methods can exhibit remarkable effects. However, designing of the texture is limited when the enzyme is used singly. For example, it is difficult to improve the tenderness, moistness, and natural fibrousness of a fried chicken in a well balanced manner when the enzyme is used singly. It should be noted that a method, which uses a combination of the transglutaminase and the α-glucosidase to improve physical properties, has not been reported.

### Disclosure of the Invention

An object of the present invention is to provide a method for producing a processed meat food or a processed fishery food with improved physical properties, taste and a product yield, and an enzyme preparation for modifying a processed meat food or a processed fishery food. Particularly, it is to provide a method for producing with an improved yield a processed meat food or a processed fishery food that exhibits excellent qualities (taste and physical properties) immediately after the production and exhibits reduced quality deterioration during the production process and the physical distribution process.

As a result of intense research, the inventors have found that the above object can be achieved by using a transglutaminase and an enzyme having a saccharide transfer activity for converting an α-1, bond to an α-1,6 bond in the production of a processed meat food or a processed fishery food, thereby accomplishing this invention. Thus, this invention is as described below.
(1) A method for producing a processed meat food or a processed fishery food, characterized by using a transglutaminase and an enzyme having a saccharide transfer activity for converting an α-1,4 bond in a sugar chain to an α-1,6 bond.
(2) The method for producing a processed meat food or a processed fishery food according to (1), characterized by additionally using a starch.
(3) The method according to (1) or (2), wherein the enzyme having a saccharide transfer activity for converting an α-1,4 bond in a sugar chain to an α-1,6 bond is an α-glucosidase.
(4) The method according to (3), wherein the α-glucosidase is used in an amount of 0.1 to 10,000 U per 1 g of the meat ingredient or the fishery ingredient and the transglutaminase is used in an amount of 0.001 to 100 U per 1 g of the meat ingredient or the fishery ingredient.
(5) The method according to (4), wherein the α-glucosidase is used in an amount of 0.1 to 10,000 U per 1 U of the transglutaminase.
(6) The method according to (4), wherein the α-glucosidase is used in an amount of 3 to 3,000 U per 1 U of the transglutaminase.
(7) An enzyme preparation for modifying a processed meat food or a processed fishery food, comprising an α-glucosidase and a transglutaminase.
(8) The enzyme preparation for modifying a processed meat food or a processed fishery food according to (7), additionally comprising a starch.
(9) The enzyme preparation according to (7) or (8), wherein the α-glucosidase is used in an amount of 0.1 to 10,000 U per 1 U of the transglutaminase.
(10) The enzyme preparation according to (7) or (8), wherein the α-glucosidase is used in an amount of 3 to 3,000 U per 1 U of the transglutaminase.

In the method for producing a processed meat food or processed fishery food according to the invention, a transglutaminase a an enzyme having a saccharide transfer activity for converting an α-1, 4 bond to an α-1,6 bond are used. For example, the enzyme having a saccharide transfer activity for converting an α-1,4 bond to an α-1,6 bond may be an α-glucosidase, a 1,4-α-glucan branching enzyme, or a 1,4-α-glucan 6-α-D-glucosyltransferase, and is preferably an α-glucosidase. The α-glucosidase preferably has a saccharide transfer ability to convert an α-1,4 bond to an α-1,6 bond, and such an α-glucosidase is referred to as a transglucosidase. Thus, a transglucosidase is an α-glucosidase enzyme having the saccharide transfer ability. An α-glucosidase is an enzyme capable of hydrolyzing an α-1,4-glucoside bond at a non-reducing terminal to generate α-glucose. Though a glucoamylase is similar in interaction to the α-glucosidase, the glucoamylase generates not α-glucose but β-glucose. It is particularly important that the enzyme used in the invention has not only the decomposition activity but also the saccharide transfer activity for converting an α-1, 4 bond to an α-1, 6 bond, thereby generating a branched sugar from a glucose, in the presence of an appropriate receptor having a hydroxyl group. Enzymes used in conventional physical property improvers are a starch decomposing enzymes and not a saccharide transfer enzymes. The enzyme under the trade name of TRANSGLUCOSIDASE L AMANO sold by Amano Enzyme Inc. is an α-glucosidase having the saccharide transfer activity for converting an α-1,4 bond to an α-1,6 bond, which is included in the the enzyme having the saccharide transfer activity for converting an α-1,4 bond to an α-1,6 bond according to the invention.

A transglutaminase is an enzyme having an activity for catalyzing an acyl transfer reaction of a glutamine residue as a donor and a lysine residue as a receptor in a protein or a peptide, and may be a known one derived from a various organism such as a mammal, fish, or microorganism. The transglutaminase used in the invention may be any one as long as it has the activity, and the source of the enzyme is not limited. The transglutaminase may be a genetically modified enzyme. Examples of such enzymes include a microorganism-derived transglutaminase under the trade name of ACTIVA TG sold by Ajinomoto Co., Inc.

In the invention, the processed meat foods include single piece meat products such as fried chickens, chicken nuggets, fried pork cutlets and hams, and meat paste products such as sausages and hamburger steaks, and the processed fishery foods include single piece fishery products such as fried shrimps, and paste fishery products such as boiled fish cakes and fish balls. The foods further include frozen products thereof. The enzyme having the saccharide transfer activity for converting an αa-1,4 bond to an α-1,6 bond and the transglutaminase may be added to and reacted with the meat or fishery food in any step in the production. In the case of producing the paste fishery product, it is preferred that after a flesh is minced with salt, the enzymes are added in the step of mixing the minced flesh with another ingredient such as a starch (main mincing). Alternatively, the enzymes may be interacted with a part of the ingredients. For example, the enzymes may be added to a marinade liquid for a fried chicken and thus reacted with the meat ingredient. The enzymes may be used in combination with another enzyme or substance. The meat or fishery ingredient may be derived from any animal, fish, or shellfish, may be in any state (a raw, dried, or heated state), and quality.

When a transglutaminase and an enzyme having the saccharide transfer activity for converting an α-1,4 bond to an α-1,6 bond such as a α-glucosidase are added to and reacted with the meat or fishery ingredient in the production of the processed meat food or the processed fishery food, the appropriate amount of the enzyme having the saccharide transfer activity is 0.015 U or more, preferably 0. to 10,000 U, more preferably 0.5 to 1,000 U, further preferably 1 to 400 U, per 1 g of the meat or fishery ingredient. When the enzymatic activity is lower than the above range, the processed meat or fishery food cannot exhibit a sufficiently improved yield and qualities (taste and physical properties) immediately after the production and cannot exhibit a sufficiently reduced quality deterioration during the production process and the physical distribution process. When the enzymatic activity is too high, the production cost is too high relative to the effects, and thus such an amount is not practical. In terms of the enzymatic activity of the enzyme having the saccharide transfer activity for converting an α-1,4 bond to an α-1, 6 bond such as the α-glucosidase, 1 U (enzyme unit) is defined as an amount of the enzyme that generates 1 µg of glucose at 40°C for 60 minutes in 2.5 ml of the reaction liquid, which is prepared by adding 1 ml of a 0.02-M acetic acid buffer (pH 5.0) to 1 ml of a 1 mM α-methyl-D-glucoside solution and by further adding 0.5 ml of an enzyme solution thereto.

When the enzyme having the saccharide transfer activity for converting an α-1,9 bond to an α-1,6 bond such as the α-glucosidase and the transglutaminase are added to and reacted with the meat or fishery ingredient in the production of the processed meat or fishery food, the appropriate amount of the transglutaminase is 0.0001 U or more, preferably 0.001 to 100 U, more preferably 0.01 to 10 U, further preferably 0.1 to 3 U, per 1 g of the meat or fishery ingredient. When the enzymatic activity is lower than the above range, the processed meat or fishery food cannot exhibit a sufficiently improved yield and qualities (taste and physical properties) immediately after the production. When the enzymatic activity is too high, the production cost is too high relative to the effects, and thus such an amount is not practical. The enzymatic activity of the transglutaminase is calculated such that benzyloxycarbonyl-L-glutaminylglycine and hydroxylamine are reacted as substrates, an iron complex is formed using the generated hydroxamic acid in the presence of trichloroacetic acid, the absorbance of the iron complex is measured at 525 nm, and the hydroxamic acid content is measured by using a calibration. 1 U (enzyme unit) is defined as an amount of the enzyme that generates 1 µmol of hydroxamic acid at 37°C for 1 minute at a pH of 6.0.

When the enzyme having the saccharide transfer activity for converting an α-1,4 bond to an α-1,6 bond such as the α-glucosidase, and the transglutaminase are added to the meat or fishery food, in terms of the amount ratio between the enzymes added, the unit number of the enzyme having the saccharide transfer activity for converting an α-1,4 bond in a sugar chain to an α-1,6 bond is preferably 0.1 to 10,000 U, more preferably 1 to 5,000 U, further preferably 3 to 3,000 U, per 1 U of the transglutaminase. When the unit number is not within the range, the enzymes cannot exhibit a synergistic effect.

The reaction time of each enzyme is not limited as long as the enzyme can act upon the substrate in the time. The reaction time may be a very short or long time, but it is preferably 5 minutes to 24 hours in practical use. The reaction temperature is not limited as long as the enzyme can exhibit the activity at the temperature. The reaction temperature is preferably 0°C to 80°C in practical use. Thus, a satisfactory reaction time can be achieved in a common meat or fishery processing.

The enzyme preparation for modifying the processed meat or fishery food can be obtained by adding to an α-glucosidase and a transglutaminase food additives and the like such as bulking agents including starches, modified starches and dextrin, seasonings including meat extracts, proteins including vegetable proteins, glutens, egg whites, gelatins and caseins, hydrolyzed proteins, partially hydrolyzed proteins, emulsifiers, chelators including citrate salts and polyphosphate salts, reductants including glutathione and cysteine, alginic acid, alkaline kansui solutions, colors, acidulants, flavoring agents and others. The enzyme preparation of the invention may be in the form of a liquid, paste, granule, or powder. The ratio of each enzyme in the enzyme preparation is more than 0% and less than 100%, and the amount of the α-glucosidase added is preferably 0.1 to 10,000 U, more preferably 1 to 5, 000 U, further preferably 3 to 3, 000 U, per 1 U of the transglutaminase.

The starch used in the invention may be derived from any plant, and examples thereof include tapioca starches, wheat starches, potato starches, sweet potato starches, rice starches, glutinous rice starches, mung bean starches, sago starches, corn starches, waxy corn starches, and mixtures thereof. The starch may be in any modified state, and may be a raw starch, a dry starch, an acetylated starch, an etherified starch, a phosphate-crosslinked starch, an oxidized starch, a gelatinized starch, etc. The starch may undergo a combination of a plurality of modification processes, and may comprise a mixture of these starches. The starch may be in any form of a powder, paste, liquid, granule, etc. In the case of producing a fried chicken, the waxy corn starch has an effect of increasing the yield of the fried chicken and thereby is particularly preferred.

### Brief Description of the Drawings

Fig. 1 is showing the results of sensory evaluation of tenderness, moistness, and natural fibrousness of fried chickens (Example 1).
Fig. 2 is showing the results of evaluation of synergistic effects for improving the tenderness, moistness, and natural fibrousness of fried chickens (Example 1).
Fig. 3 is showing the results of sensory evaluation of hardness, elasticity, and flexibility of sausages (Example 3).
Fig. 4 is showing the results of evaluation of synergistic effects for improving the hardness, elasticity, and flexibility of sausages (Example 3).
Fig. 5 is showing the results of sensory evaluation of hardness, elasticity, flexibility, and overall characteristic of boiled fish cakes (Example 9).

### Best Mode for Carrying Out the Invention

The present invention will be described more specifically with reference to Examples below. It is to be understood that the invention is not limited to Examples.

### Example 1: Fried chicken

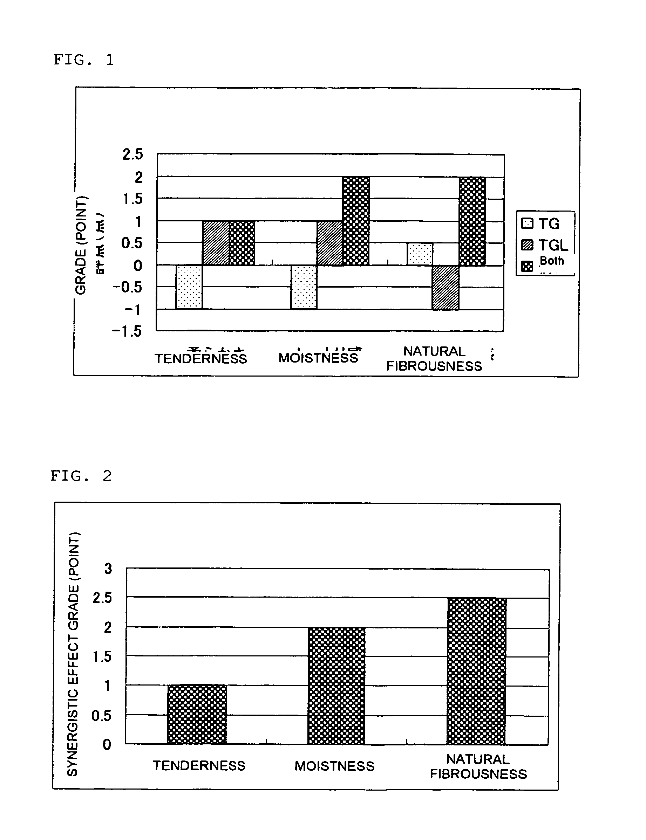

After removing skin and fat portions, a chicken thigh meat (a domestic whole meat) was marinated and tumbled at 5°C for 2 hours in a marinade liquid of 120% to meat (20 parts of the liquid per 100 parts of the meat by weight). The tumbling was carried out using a triple rotary manufactured by Tohnichi MFG. Co., Ltd. The composition of the marinade liquid is shown in Table 1. TRANSGLUCOSIDASE L (manufactured by Amano Enzyme Inc., hereinafter referred to as TGL) and a transglutaminase preparation ACTIVA TG (manufactured by Ajinomoto Co., Inc., hereinafter referred to as TG) were used as the enzymes, and MATSUTANI MOMIJI (manufactured by Matsutani Chemical Industry Co., Ltd.) was used as the modified starch. 4 test samples, including a control sample added with no enzymes, a sample added with only TG, a sample added with only TGL, and a combination sample added with TG and TGL, were used in this experiment. In the combination sample, the amount of TGL per 1 U of TG was approximately 100 U. After the tumbling, the meat was left overnight, cut into 25 g each, and coated with a potato starch powder. The cut meat was fried at 175°C for 4 minutes and 30 seconds in a fryer HFT-18F (manufactured by Eiko Sangyo), and then frozen at -40°C. The meat was thawed at the room temperature and warmed up in a microwave range, and the product was subjected to a sensory evaluation. In the sensory evaluation, the tenderness, moistness, and natural fibrousness were evaluated by 3 panelists on a grade scale of -2 to 2, the control being 0. The results are shown in Fig. 1. Furthermore, the theoretical grades of the combination sample were calculated based on the results of the sample added with only TG and the sample added with only TGL. For example, when the sample added with only 0.82 U of TG (per 1 g of the meat) exhibited a tenderness grade of -1 and the sample added with only 79.2 U of TGL (per 1 g of the meat) exhibited a tenderness grade of 1, the theoretical tenderness grade of the combination sample added with both the enzymes in the same amounts was 0, the sum of the tenderness grades. The differences between thus calculated theoretical grades and the measured grades are shown in Fig. 2. When the difference is zero, the combination sample is considered to have an additive effect corresponding to the theoretical grade. When the difference is more than zero, the combination sample is considered to have a synergistic effect superior to the theoretical grade.

**Table 1: Composition of marinade liquid**

| | Test sample | | | |
|---|---|---|---|---|
| | Control | TG | TGL | Combination |
| Salt (%) | 4 | 4 | 4 | 4 |
| Water (%) | 86 | 86 | 86 | 86 |
| Modified starch (%) | 10 | 10 | 10 | 10 |
| TG (U per 1 g of meat) | | 0.82 | | 0.82 |
| TGL (U per 1 g of meat) | | | 79.2 | 79.2 |

As shown in Fig. 1, TG acted to improve the natural fibrousness but to deteriorate the tenderness and moistness, and TGL acted to improve the tenderness and moistness but to deteriorate the natural fibrousness. When the enzymes were used in combination, the tenderness, moistness, and natural fibrousness were improved to give a preferable texture. Furthermore, as shown in Fig. 2, the synergistic effects were observed in all the evaluation items. It was clarified that, when a fried chicken, a single piece meat product (a meat product from one whole meat), was produced by using not a single enzyme TG nor TGL but the combination of the enzymes, the resultant fried chicken had an improved texture. Thus, the combination exhibited the synergistic effects on the modification of the texture. In addition, the sample added with only TGL and the combination sample exhibited yields higher than that of the control. Thus, it was confirmed that the combination sample exhibited a yield improvement effect in addition to the synergistic texture improving effects.

### Example 2: Fried chicken

After removing skin and fat portions, a chicken thigh meat (a domestic whole meat) was cut into 23 to 25g pieces. An enzyme preparation containing an enzyme and a starch was mixed with and dissolved in water to prepare a marinade liquid having a composition shown in Table 2, and the cut meat was marinated and vacuum-tumbled at 34 rpm at 5°C for 30 minutes in the marinade liquid for 150% water addition (50 parts of the marinated liquid per 100 parts of the meat by weight). The vacuum tumbling was carried out using a compact tumbler manufactured by Tohnichi MFG. Co., Ltd.

**Table 2: Composition of marinade liquid, sensory evaluation result, and the yield of the samples**

| | | Control | (1) | (2) | (3) | (4) | (5) |
|---|---|---|---|---|---|---|---|
| Salt (%) | | 5 | 5 | 5 | 5 | 5 | 5 |
| Enzyme preparation | TG (%) | 0 | 0.054 | 0.09 | 0.09 | 0.09 | 0.117 |
| | TGL (%) | 0 | 0.0018 | 0.0009 | 0.0018 | 0.0024 | 0.0018 |
| | MD (%) | 0 | 2.9442 | 2.9091 | 2.9082 | 2.9076 | 2.8812 |
| Water | | 95 | 92 | 92 | 92 | 92 | 92 |
| TG (U per 1 g of meat) | | 0 | 0.29 | 0.46 | 0.46 | 0.46 | 0.60 |
| TGL (U per 1 g of meat) | | 0 | 4.7 | 2.2 | 4.7 | 6.2 | 4.7 |
| Sensory evaluation | Tenderness | 0 | 2 | 1 | 2 | 1.5 | 0.75 |
| | Moistness | 0 | 1.5 | 1.5 | 1.5 | 1.5 | 1.75 |
| | Natural fibrousness | 0 | 1 | 1.5 | 1 | 1.5 | 2 |
| Yield of Sample product | | 126 | 132 | 132 | 132 | 134 | 134 |

In the enzyme preparation, TGL and TG were used as the enzymes, and a waxy corn starch MD (manufactured by Nihon Shokuhin Kako Co., Ltd.) was used as the starch. After the tumbling, the meat was left at 5°C for 30 minutes, coated with a potato starch powder, fried at 175°C for 4 minutes and 30 seconds in a fryer HFT-18F (manufactured by Eiko Sangyo), and then frozen at -40°C. The meat was thawed at the room temperature and warmed up in a microwave range, and the product was subjected to a sensory evaluation. In the sensory evaluation, the tenderness, moistness, and natural fibrousness were evaluated by 3 panelists on a grade scale of -2 to 2, the control being 0. Furthermore, the yield of each sample product (the part by weight of the fried chicken product after frying and cooling to the room temperature per 100 parts by weight of the meat ingredient) was measured. The sensory evaluation results and the yield of each sample product are shown in Table 2. As shown in Table 2, by using the enzyme preparation containing TG, TGL, and the waxy corn starch, the fried chicken can be produced with excellent texture and a high yield.

### Example 3: Sausage

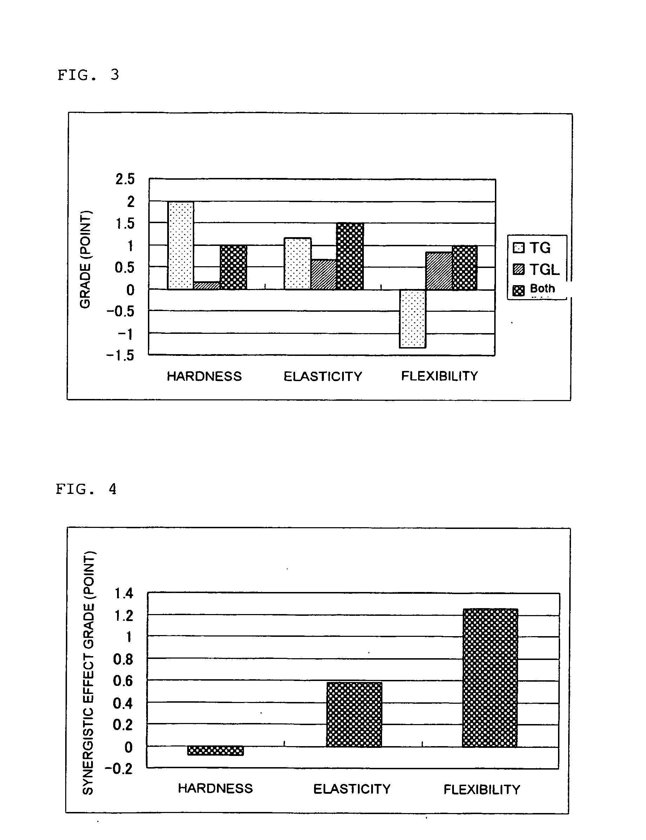

A frozen pork foreleg meat (from Denmark) was thawed, and a lean portion was minced. In accordance with a composition shown in Table 3, the salts (B in Table 3) and part of the crushed ice were added to the minced meat, and the resultant was subjected to cutting using a silent cutter MK13 (manufactured by Muller). When the temperature of the mixture was increased to 4°C, the seasonings (C in Table 3) and part of the crushed ice were added thereto, and the resultant mixture was subjected to cutting. The pork backfat was added to the mixture at 6°C, the proteins (A in Table 3), enzymes, and residual crushed ice were added thereto at 10°C, and the resultant mixture was subjected to cutting. 4 test samples, including a control sample added with no enzymes, a sample added with only TG, a sample added with only TGL, and a combination sample added with TG and TGL, were used in this experiment. In the combination sample, the amount of TGL per 1 U of TG was 800 U. When the temperature of the mixture was increased to 12°C, the mixture was degassed and enclosed in a 210 mm-diameter collagen casing NIPPI CASING (manufactured by Nippi Collagen Industries, Ltd.). The resultant was left at the room temperature for 1 hour from the start of the cutting, heated at 60°C for 40 minutes, and then wrapped in vacuum, boiled at 75°C for 30 minutes, and cooled to 5°C, to obtain a finely minced sausage. The finely minced sausage was stored at 5°C for 2 weeks, and then boiled for 5 minutes and subjected to a sensory evaluation. In the sensory evaluation, the hardness, elasticity, and flexibility were evaluated by 4 panelists on a grade scale of -2 to 2, the control being 0. The results are shown in Fig. 3. Furthermore, the theoretical grades of the combination sample were calculated based on the results of the sample added with only TG and the sample added with only TGL. For example, when the sample added with only 0.46 U of TG (per 1 g of the meat) exhibited an elasticity grade of 1.17, the sample added with only 365.46 U of TGL (per 1 g of the meat) exhibited an elasticity grade of 0.67, and the combination sample was added with 0.23 U of TG and 182.73 U of TGL (per 1 g of the meat), corresponding elasticity grades were calculated using 1.17×0.23/0.46=0.58 and 0.67×182.73/365.46=0.33. Thus, the theoretical elasticity grade of the combination sample was the sum of the corresponding elasticity grades, 0.58+0.33=0.91. The differences between thus calculated theoretical grades and the measured grades are shown in Fig. 4. When the difference is zero, the combination sample is considered to have an additive effect corresponding to the theoretical grade. When the difference is more than zero, the combination sample is considered to have a synergistic effect superior to the theoretical grade.

As shown in Fig. 3, TG acted to improve the hardness and elasticity but to deteriorate the flexibility, and TGL acted to improve the elasticity and flexibility. When the enzymes were used in combination, the hardness, elasticity, and flexibility were improved to give a preferable texture. Furthermore, as shown in Fig. 4, the synergistic effects were observed in the elasticity and flexibility evaluation. It was clarified that, when a sausage kneaded with a starch, which is a meat paste product, was produced by using not a single enzyme TG or TGL but the combination of the enzymes, the resultant sausage had an improved texture. Thus, the combination exhibited the synergistic effects on the modification of the texture.

**Table 3: Composition of sausage**

| | Ingredient | | Test sample | | | |
|---|---|---|---|---|---|---|
| | | | Control | TG | TGL | Combination |
| | Pork foreleg meat (minced) | (%) | 44 | 44 | 44 | 44 |
| | Pork backfat (minced) | (%) | 22.5 | 22.5 | 22.5 | 22.5 |
| A | Soy protein FUJIPRO-E | (%) | 1.5 | 1.5 | 1.5 | 1.5 |
| A | Potato starch GINREI | (%) | 5 | 5 | 5 | 5 |
| A | Casein Na MIPRODAN CW | (%) | 1 | 1 | 1 | 1 |
| B | Salt | (%) | 1.7 | 1.7 | 1.7 | 1.7 |
| B | Phosphate salt | (%) | 0.3 | 0.3 | 0.3 | 0.3 |
| B | Sodium ascorbate | (%) | 0.08 | 0.08 | 0.08 | 0.08 |
| B | Sodium nitrite . | (%) | 0.02 | 0.02 | 0.02 | 0.02 |
| C | Granulated sugar | (%) | 1.4 | 1.4 | 1.4 | 1.4 |
| C | "AJINOMOTO" | (%) | 0.2 | 0.2 | 0.2 | 0.2 |
| C | White pepper | (%) | 0.2 | 0.2 | 0.2 | 0.2 |
| | Crushed ice | (%) | 22.1 | 22.1 | 22.1 | 22.1 |
| | TG (U per 1 g of meat) | | - | 0.46 | - | 0.23 |
| | TGL (U per 1 g of meat) | | - | - | 365.46 | 182.73 |

### Example 4: Boiled fish cake

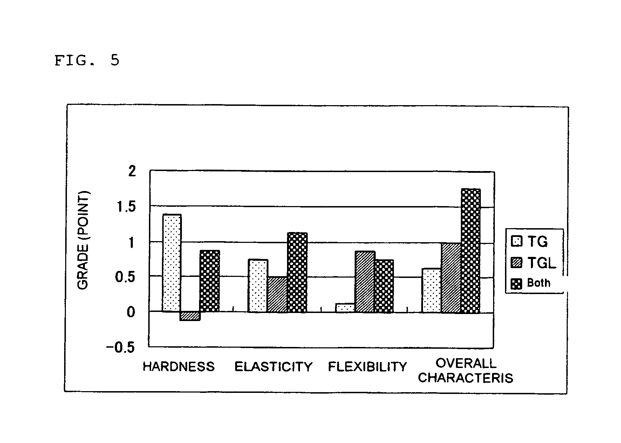

An alaska pollock was minced by a frozen cutter FZ (manufactured by Shonan Sangyo Co., Ltd.) to obtain a frozen minced flesh (second grade). 1000 g of the frozen minced flesh was partially thawed and subjected to cutting for 3 minutes using a Stephen cutter UMC5 (manufactured by Stephen Food Service). Then, 20 g of salt and 250 g of ice water were added to the minced flesh, and the resultant mixture was stirred until the temperature of the minced flesh reached 0°C. Thereto were added 250 g of ice water, 200 g of potato starch GINREI (manufactured by Nihon Shokuhin Kako Co., Ltd.), 30 g of sugar, 5 g of sodium glutamate, and an enzyme, and the resultant mixture was stirred until the temperature of the minced flesh reached 15°C. 4 test samples, including a control sample added with no enzymes, a sample added with only TG, a sample added with only TGL, and a sample added with both TG and TGL, were used in this experiment. In the sample added with only TG, the amount of TG per 1 g of the minced flesh was 0.115 U. In the sample added with only TGL, the amount of TGL per 1 g of the minced flesh was 75 U. In the sample with both TG and TGL, the amount of TG was 0.115 U, the amount of TGL was 75 U, and the amount of TGL per 1 U of TG was approximately 650 U. The obtained paste was put in a 3-cm-diameter casing tube KUREHARON CASING A08 (manufactured by Kureha Corporation), heated in hot water having a temperature of 85°C for 20 minutes, and cooled in ice water for 30 minutes, to obtain a boiled fish cake. The obtained boiled fish cake was subjected to freezing and thawing at the ordinary temperature repeatedly three times, and then subjected to a sensory evaluation. In the sensory evaluation, the hardness, elasticity, flexibility, and overall characteristic were evaluated by 4 panelists on a grade scale of -2 to 2, the control being 0. The results are shown in Fig. 5. Furthermore, the theoretical overall characteristic grade of the sample added with the both were calculated based on the results of the sample added with only TG and the sample added with only TGL, and compared with the measured grade.

As shown in Fig. 5, TG acted to improve the hardness and elasticity, and TGL acted to improve the elasticity and flexibility. When the enzymes were used in combination, the hardness, elasticity, and flexibility were improved in a well balanced manner to give a high grade in the overall characteristic evaluation. Since the sample added with only 0.115 U of TG (per 1 g of the minced flesh) exhibited an overall characteristic grade of 0.625, and the sample added with only 75 U of TGL (per 1 g of the minced flesh) exhibited an overall characteristic grade of 1, the theoretical overall characteristic grade of the combination sample added with both the enzymes in the same amounts was 1.625, the sum of the overall characteristic grades corresponding to the additive effect. However, the combination sample practically exhibited an overall characteristic grade of 1.8 corresponding to the synergistic effect superior to the additive effect. It was clarified that, in the production of a boiled fish cake being a paste fishery product kneaded with a starch, by using not a single enzyme TG or TGL but the combination of the enzymes, the resultant boiled fish cake had an improved texture. Thus, the combination exhibited the synergistic effects on the modification of the texture. In addition, it was confirmed that the paste fishery product could maintain the preferable texture even after the freezing and thawing, and thereby could be high in refrigerated transportation resistance and qualities.

### Example 5: Hamburger steak

52 parts by weight of an enzyme preparation ACTIVA AG-J (manufactured by Ajinomoto Co., Inc.) containing TG, TGL, and a waxy corn starch was added to and mixed with 8824 parts by weight of a ground beef and pork meat (containing 50% of beef meat and 50% of pork meat) and 1176 parts by weight of a chopped onion, and the resulting mixture was formed into an oval shape. The oval-shaped mixture was left at 5°C for 24 hours to carry out the enzymatic reactions, and then one surface of the mixture was burned at 180°C for 3 minutes by a hot plate. Then, the mixture was turned, and the other surface was burned at 180°C for 3 minutes. The mixture was further heated at 180°C for 7 minutes under steam convection, to obtain a hamburger steak. In this example, the amounts of TG and TGL added per 1 g of the meat ingredient were 0.14 U and 1.0 U respectively.

A control hamburger steak was produced in the same manner except for not adding the enzyme preparation.

The sample containing the enzymes had a moist tender texture and excellent juiciness, while the control sample (containing no enzymes) was hard, dry, and poor in juiciness. Furthermore, the sample containing the enzymes had a cooking yield (the weight ratio of the burned and heated hamburger steak to 100 parts by weight of the unburned and unheated hamburger steak) of 80.1%, while the control sample had a cooking yield of 74.4%.

Thus, the hamburger steak could be produced with excellent texture and a high cooking yield by using TG, TGL, and the waxy corn starch.

### Example 6: Chopped ham

A frozen pork thigh meat from Canada was thawed, and a fat portion was removed therefrom. The meat was tenderized on both sides once using a tabletop tenderizer (manufactured by Tohnichi MFG. Co., Ltd.), and was minced on a three-holed plate of GREAT MINCE WMG-22 manufactured by Watanabe Foodmach Co., Ltd. 110 parts by weight of a pickle having a composition shown in Table 4 was added to 100 parts by weight of the minced meat, and the resultant was tumbled at 5°C for 16 hours using a triple tumbler manufactured by Tohnichi MFG. Co., Ltd. to obtain a marinated meat. A milk protein SUPER-LACTO #1 (manufactured by Taiyo Kagaku Co., Ltd.) was mixed with 95 parts by weight of the marinated meat, and the mixture was subjected to cutting using a silent cutter MK-13 (manufactured by Muller) to prepare a filler. To 1,200 g of the marinated meat and 700 g of the filler was added a dispersion of 36 g of ACTIVA AG BALANCE-KEEP U (manufactured by Ajinomoto Co., Inc.), which is an enzyme preparation containing TG and TGL, in 100 g of a potato starch (GINREI manufactured by Nihon Shokuhin Kako Co., Ltd.), and the resultant was mixed for 3 minutes using a hobart mixer (KSM5 manufactured by Kitchenaid, Inc.) In this example, the amounts of TG and TGL added per 1 g of the meat ingredient were 0.46 U and 1,083 U respectively. The obtained mixture was put in a casing (KUREHARON CASING 100-mm φ manufactured by Kureha Corporation), left at 5°C for 2 hours to carry out the enzymatic reactions, and heated at 80°C for 2 hours (at a center temperature of 72°C) to produce a chopped ham. Further a control chopped ham was produced in the same manner except for not adding the enzyme preparation.

**Table 4: Composition of pickle**

| Ingredient | Composition ratio |
|---|---|
| Soy protein <NEW FUJIPRO 1700> (Fuji Oil Co., Ltd.) | 4 |
| Egg protein <Powder egg white> | 4.5 |
| Milk protein <SUPER-LACTO #1> (Taiyo Kagaku Co., Ltd.) | 3.5 |
| Salt <NAKURU M> | 2.65 |
| Phosphate salt <POLYGON C> | 0.95 |
| Sodium ascorbate (food additive) | 0.1 |
| Sodium nitrite (food additive) | 0.03 |
| MSG | 0.5 |
| Starch syrup <AMAMEAL> (Mitsubishi Shoji Foodtech Co., Ltd.) | 12 |
| Cochineal dye <SUNRED> | 0.08 |
| Control water | 71.69 |

Each chopped ham was cut into 1.2-mm-thick slices, and subjected to a sensory evaluation. As a result, the sample containing the enzyme preparation had a moister texture as compared with the control sample. In addition, the sample containing the enzyme preparation maintained the moister texture even after stored for a week in the chilled state.

### Industrial Applicability

According to the present invention, the qualities of processed meat foods or processed fishery foods can be improved, therefore it is remarkably useful in the food field.

## Claims

1. A method for producing a processed meat food or a processed fishery food, **characterized by** using a transglutaminase and an enzyme having a saccharide transfer activity for converting an α-1,4 bond in a sugar chain to an α-1,6 bond.

2. The method for producing a processed meat food or a processed fishery food according to claim 1, **characterized by** additionally using a starch.

3. The method according to claim 1 or 2, wherein the enzyme having a saccharide transfer activity for converting an α-1,4 bond in a sugar chain to an α-1,6 bond is an α-glucosidase.

4. The method according to claim 3, wherein the α-glucosidase is used in an amount of 0.1 to 10,000 U per 1 g of the meat ingredient or the fishery ingredient and the transglutaminase is used in an amount of 0.001 to 100 U per 1 g of the meat ingredient or the fishery ingredient.

5. The method according to claim 4, wherein the α-glucosidase is used in an amount of 0.1 to 10,000 U per 1 U of the transglutaminase.

6. The method according to claim 4, wherein the α-glucosidase is used in an amount of 3 to 3,000 U per 1 U of the transglutaminase.

7. An enzyme preparation for modifying a processed meat food or a processed fishery food, comprising an α-glucosidase and a transglutaminase.

8. The enzyme preparation for modifying a processed meat food or a processed fishery food according to claim 7, additionally comprising a starch.

9. The enzyme preparation according to claim 7 or 8, wherein the α-glucosidase is used in an amount of 0.1 to 10,000 U per 1 U of the transglutaminase.

10. The enzyme preparation according to claim 7 or 8, wherein the α-glucosidase is used in an amount of 3 to 3,000 U per 1 U of the transglutaminase.

## Patentansprüche

1. Verfahren zum Herstellen eines verarbeiteten Fleischnahrungsmittels oder eines verarbeiteten Fischnahrungsmittels, **dadurch gekennzeichnet, dass** eine Transglutaminase und ein Enzym mit einer Saccharidtransferaktivität zum Umwandeln einer α-1,4-Bindung in einer Zuckerkette in eine α-1,6-Bindung eingesetzt wird.

2. Verfahren zum Herstellen eines verarbeiteten Fleischnahrungsmittels oder eines verarbeiteten Fischnahrungsmittels nach Anspruch 1, **gekennzeichnet durch** die zusätzliche Verwendung einer Stärke.

3. Verfahren nach Anspruch 1 oder 2, wobei das Enzym mit einer Saccharidtransferaktivität zum Umwandeln einer α-1,4-Bindung in einer Zuckerkette in eine α-1,6-Bindung eine α-Glucosidase ist.

4. Verfahren nach Anspruch 3, wobei die α-Glucosidase in einer Menge von 0,1 bis 10.000 U pro 1 g des Fleischbestandteils oder des Fischbestandteils eingesetzt wird und die Transglutaminase in einer Menge von 0,001 bis 100 U pro 1 g des Fleischbestandteils oder des Fischbestandteils eingesetzt wird.

5. Verfahren nach Anspruch 4, wobei die α-Glucosidase in einer Menge von 0,1 bis 10.000 U pro 1 U der Transglutaminase eingesetzt wird.

6. Verfahren nach Anspruch 4, wobei die α-Glucosidase in einer Menge von 3 bis 3.000 U pro 1 U der Transglutaminase eingesetzt wird.

7. Enzymzubereitung zum Modifizieren eines verarbeiteten Fleischnahrungsmittels oder eines verarbeiteten Fischnahrungsmittels, welches eine α-Glucosidase und eine Transglutaminase enthält.

8. Enzymzubereitung zum Modifizieren eines verarbeiteten Fleischnahrungsmittels oder eines verarbeiteten Fischnahrungsmittels nach Anspruch 7, welche zusätzlich eine Stärke enthält.

9. Enzymzubereitung nach Anspruch 7 oder 8, wobei die α-Glucosidase in einer Menge von 0,1 bis 10.000 U pro 1 U per Transglutaminase eingesetzt wird.

10. Enzymzubereitung nach Anspruch 7 oder 8, wobei die α-Glucosidase in einer Menge von 3 bis 3.000 U pro 1 U der Transglutaminase eingesetzt wird.

## Revendications

1. Procédé de production d'un aliment industriel de viande ou d'un aliment industriel de poisson, **caractérisé en ce que** l'on utilise une transglutaminase et un enzyme présentant une activité de transfert de saccharide pour convertir une liaison α-1,4 dans une chaîne de sucre en une liaison α-1,6.

2. Procédé de production d'un aliment industriel de viande ou d'un aliment industriel de poisson selon la revendication 1, **caractérisé en ce que** l'on utilise de plus un amidon.

3. Procédé selon la revendication 1 ou 2, dans lequel l'enzyme présentant une activité de transfert de saccharide pour convertir une liaison α-1,4 dans une chaîne de sucre en une liaison α-1,6 est une α-glucosidase.

4. Procédé selon la revendication 3, dans lequel l'α-glucosidase est utilisée dans une quantité de 0,1 à 10 000 U pour 1 g de l'ingrédient de viande ou de l'ingrédient de poisson et la transglutaminase est utilisée dans une quantité de 0,001 à 100 U pour 1 g de l'ingrédient de viande ou de l'ingrédient de poisson.

5. Procédé selon la revendication 4, dans lequel l'α-glucosidase est utilisée dans une quantité de 0,1 à 10 000 U pour 1 U de la transglutaminase.

6. Procédé selon la revendication 4, dans lequel l'α-glucosidase est utilisée dans une quantité de 3 à 3 000 U pour 1 U de la transglutaminase.

7. Préparation d'enzyme pour modifier un aliment industriel de viande ou un aliment industriel de poisson comprenant une α-glucosidase et une transglutaminase.

8. Préparation d'enzyme pour modifier un aliment industriel de viande ou un aliment industriel de poisson selon la revendication 7, comprenant de plus un amidon.

9. Préparation d'enzyme selon la revendication 7 ou 8, dans laquelle l'α-glucosidase est utilisée dans une quantité de 0,1 à 10 000 U pour 1 U de la transglutaminase.

10. Préparation d'enzyme selon la revendication 7 ou 8, dans laquelle l'α-glucosidase est utilisée dans une quantité de 3 à 3 000 U pour 1 U de la transglutaminase.
